Europäisches Patentamt

European Patent Office

Office européen des brevets

(11) Veröffentlichungsnummer: **0 115 588**
**B1**

(12) **EUROPÄISCHE PATENTSCHRIFT**

(45) Veröffentlichungstag der Patentschrift: 02.03.88

(51) Int. Cl.⁴: **B 62 J 27/00**

(21) Anmeldenummer: **83112048.0**

(22) Anmeldetag: **01.12.83**

(54) **Einspurfahrzeug, insbesondere Motorrad.**

(30) Priorität: **04.12.82 DE 3244967**

(43) Veröffentlichungstag der Anmeldung:
**15.08.84 Patentblatt 84/33**

(45) Bekanntmachung des Hinweises auf die
Patenterteilung:
**02.03.88 Patentblatt 88/09**

(84) Benannte Vertragsstaaten:
**DE FR GB IT**

(56) Entgegenhaltungen:
**CH-A- 192 002**
**DE-A-3 125 460**
**FR-A-2 401 057**
**FR-A-2 486 483**
**GB-A-2 008 050**

(73) Patentinhaber: **BAYERISCHE MOTOREN WERKE**
**Aktiengesellschaft**
**Postfach 40 02 40 Petuelring 130 - AJ-36**
**D-8000 München 40 (DE)**

(72) Erfinder: **Seidl, Josef**
**Tristanstrasse 18**
**D-8034 Germering (DE)**

(74) Vertreter: **Dexheimer, Rolf et al**
**c/o Bayerische Motoren Werke**
**Aktiengesellschaft Postfach 40 02 40**
**D-8000 München 40 (DE)**

Courier Press, Leamington Spa, England.

EP 0 115 588 B1

Beschreibung

Die Erfindung bezieht sich auf ein Einspurfahrzeug, insbesondere Motorrad nach dem Oberbegriff des Hauptanspruchs.

Die Unfallforschung zeigt, daß bei solchen Unfällen, bei denen das Motorrad seitlich auf einen Personenkraftwagen aufprallt, das Verletzungsrisiko für den Motorradfahrer dann am größten ist, wenn er mit dem Kopf auf die Dachkante des Personenkraftwagens aufschlägt. Überfliegt er jedoch das Fahrzeug, sind die Verletzungen in der Regel geringfügiger. Es ist daher unter anderem vorgeschlagen worden, dem Kraftstofftank eine ansteigende Form zu geben. Dadurch wirkt seine Oberseite als Abweisfläche, die den Motorradfahrer bei einem Unfall wie auf einer Rample nach oben beschleunigt in eine Flugbahn, di über das Fahrzeug führt.

Es ist jedoch nich immer möglich, eine solche ansteigende Tankform vorzusehen. Desweiteren kann bei einem derart ausgebildeten Tank die angestrebte Wirkung dann zunichte gemacht werden, wenn auf dem Kraftstofftank ein Behältnis — in der Regel ein sogenannter Tankrucksack — angeordnet wird. In diesen Fällen prallt der Fahrer auf das Behältnis, ohne nach oben beschleunigt zu werden.

Aus der FR—A—2486 483 ist eine Schutzanordnung gemäß dem Oberbegriff des Ansp<dis 1 bekannt geworn den aus einen Abstützelement, das vor dem Oberkörper des Fahrers auf dem Tank des Motorrades angeordnet ist. Dabei ist das Abstützelement im Normalfall fest mit dem Fahrzeug verbunden.

Diese Veröffentlichung strebt unter anderem an, daß der Fahrer in der Schutzanordnung bei einer Kollision gehalten und vor einem Abwerfen oder Überrutschen bewahrt ist. Erst bei übermäßiger Verzögerung soll sich die Schutzanordnung zusammen mit dem Fahrer vom Fahrzeug lösen. Für diesen Fall werden Führungsmittel vorgeschlagen, welche der Schutzanordnung beim Freikommen vom Motorrad eine gegenüber der Bewegungsrichtung des Motorrads unterschiedliche Bewegungsrichtung einprägen.

Aufgabe der Erfindung ist es, vor allem bei einem seitlichen Aufprall eines Motorrads auf einen Personenkraftwagen auch dann das überfliegen des Motorradfahrers über den Personenkraftwagen sicherzustellen, wenn auf dem Kraftstofftank ein Behältnis angeordnet ist oder die Tankform keine ansteigende Abweisfläche aufweist.

Die Aufgabe wird erfindungsgemäß mit den Merkmalen des Hauptanspruchs gelöst. Weitere vorteilhafte Ausgestaltungen der Erfindung ergeben sich aus den Unteransprüchen.

Durch seine drehbare Anlenkung am Motorradrahmen führt das Abstützelement bei einem Aufprall des Motorrades auf ein Hindernis eine Drehbewegung aus. Es hebt den Motorradfahrer, der durch den Aufprall auf die Abweisfläche gedrückt worden ist, aus seinem Sitz heraus und beschleunigt ihn in einer Kreisbahn nach oben.

Wird die Zentrifugalkraft zu groß, löst sich der Fahrer vom Abstützelement und fliegt über das Hindernis.

Die Querachse muß unterhalb der Abweisfläche liegen. Denn nur so kann die vom Körper des Fahrers auf die Abweisfläche eingeleitete Kraft ein Drehmoment im Abstützelement erzeugen. Ebenso muß die Drehachse vor der Abweisfläche liegen. Nur dann stellt sich die Abweisfläche auf und ermöglicht das Herausheben des Fahrers aus dem Sitz.

Das Abstützelement muß nicht unbedingt ein Behältnis sein. Es muß aber in allen Fällen in der Lage sein, den Aufprall des Fahrers standzuhalten. Es darf nicht einknicken, da sonst die zu dem Katapulteffekt führende Drehbewegung nichs mehr gewährleistet ist.

Um das Verletzungsrisiko des Fahrers zu vermindern, ist est zweckmäßig, die Abweisfläche zu polstern. Dadurch wird der Fahrer bei seiner Vorverlagerung weich abgefangen. Weiter ist es vorteilhaft, die Abweisfläche in ihrer Höhe verstellbar zu machen. Sie läßt sich so an die unterschiedlichen Körpergrößen der einzelnen Motorradfahrer anpassen. Wird als Abstützelement ein Behältnis verwendet, ist es zweckmäßig, es zweiteilig auszulegen mit einem Bodenteil, an dem schwenkbar ein Oberteil angelenkt ist. Auf diese Weise läßt sich die gewünschte Höhenverstellung der Abweisfläche durch einfaches Verschwenken des Oberteils erreichen. Für die Verriegelung der beiden Teile miteinander in der jeweiligen Schwenklage sind entweder am Boden- oder Oberteil bespielsweise Raststufen vorgesehen, in die ein entsprechendes Gegenstück am jeweils anderen Teil eingreift.

Um beim normalen Fahrbetrieb die Drehbewegung des Abstützelement zu unterbinden, ist es weiter vorteilhaft, ein Sicherungsriegel vorzusehen mit einer Trägheitsmasse, der sich gegen eine Feder abstützt. Der Sicherungsriegel greift in ein entsprechendes rahmenfestes Teil und blokiert dadurch die Drehbewegung. Bei einem Unfall bewegt sich der Sicherungsriegel, bedingt durch die hohen Verzögerungskräfte, die an seiner Trägheitsmasse wirken, gegen die Kraft der Feder aus dem rahmenfesten Teil heraus und gibt die Drehbewegung des Abstützelements frei.

In einer weiteren Ausgestaltung der Erfindung weist das Abstützelement seitlich abstehende Ausformungen auf. Diese Ausformungen dienen als Knieschutz, sie können aber auch die Flugbahn mitbeeinflussen.

Ein weiter Vorteil der Erfindung liegt darin, daß ein Motorrad ohne großen Bauaufwand erfindungsgemäß umgerüstet werden kann. Da die Drehbewegung des Abstützelements durch die auftretenden kinetischen Kräfte bewirkt wird, sind keine zusätzlichen Treibmittel und deren Versorgungsleitungen notwendig. Wird das Abstützelement als Behältnis ausgelegt, kann es anstelle eines Tankrucksackes verwendet werden mit all den Vorzügen, die diesen zu eigen sind.

In der nachfolgenden Beschreibung und der dazugehörigen Zeichnung ist ein Ausführungsbeispiel der Erfindung näher dargestellt. Die Zeichnung zeigt in

Fig. 1 schematisch diejenigen Teile eines Motorrads, die für das Verständnis der Erfindung notwendig sind;

Fig. 2 einen Querschnitt durch ein als Tankrucksack dienendes Behältnis und

Fig. 3a—c stilisiert aufeinanderfolgende Phasen beim Aufprall eines Motorrads auf eine Hindernis.

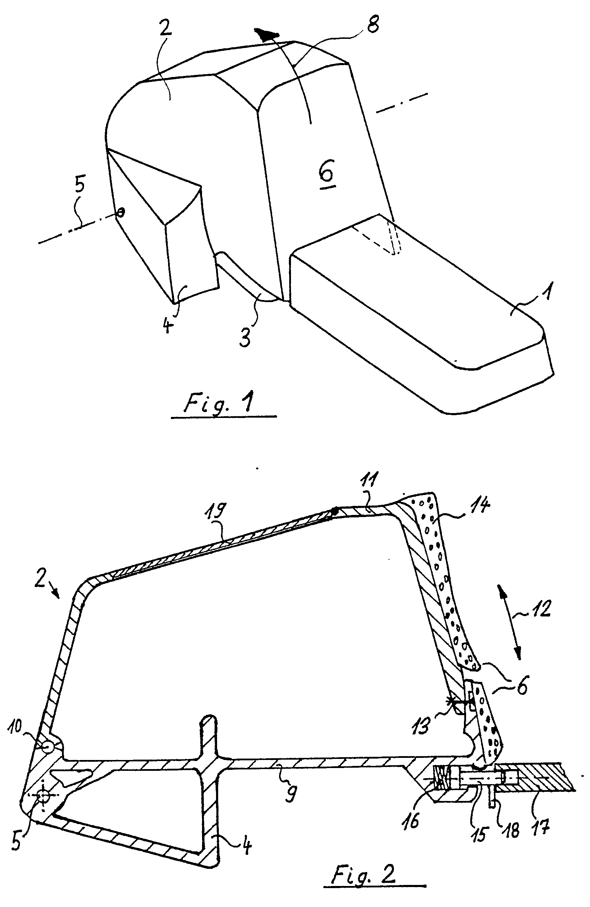

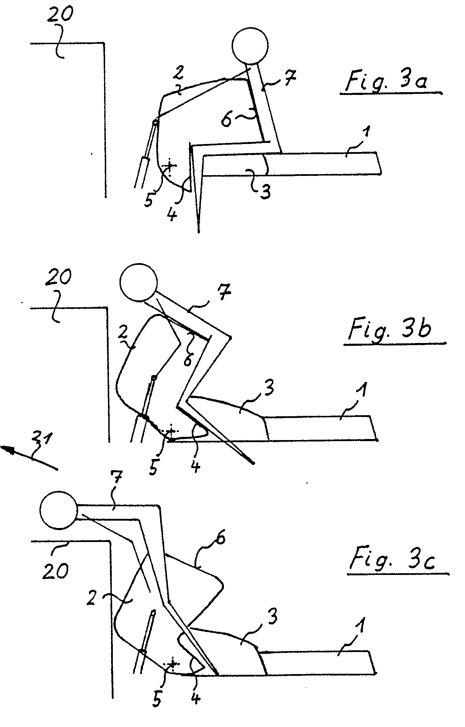

Die in Fig. 1 schematisch dargestellten Teile eines Motorrades zeigen eine Sitzbank 1 und einen davor angeordnetes, in sich formsteifes Abstützelement 2. Unter "davor" ist in Fahrtrichtung zu verstehen. Das Abstützelement 2 sitzt auf einem Kraftstofftank 3 und weist an seinen Seitenflächen Ausformungen 4 auf, die als Knieschutz für den Motorradfahrer dienen. Außerdem ist das Abstützelement 2 am nichtgezeichnenten Motorradrahmen drehbar angelenkt. Die Drehnachse trägt die Bezugsziffer 5 und verläuft im wesentlichen horizontal und quer zur Motorradlängsachse. Auf seiner der Drehachse 5 gegenüberliegenden Seite weist das Abstützelement 2 eine Abweisfläche 6 auf. Wie aus Fig. 3a ersichtlich, ist die Abweisfläche 6 etwa vor dem Oberkörper eines Fahrers 7 angeordnet. Wei aus dieser Fig. weiter zu entnehmen ist, liegt die Drehachse 5 unterhalb und in Fahrtrichtung gesehen vor der Abweisfläche 6. In Fig. 1 deutet ein Pfeil 8 die Richtung an, in welche das Abstützelement 2 bei einem Auffahrunfall drehen kann.

Das Abstützelement 2 ist hier als Behältnis, insbesondere als Tankrucksack ausgeführt. Fig. 2 zeigt ihn in einem Längsschnitt. Er ist aufgebaut aus einem Bodenteil 9, mit dem er auf dem Kraftstofftank 3 aufliegt. Am Bodenteil 9 ist über ein Drehgelenk 10 ein Oberteil 11 schwenkbar angelenkt. Durch die schwenkbare Anlenkung läßt sich die Abweisfläche 6 in ihrer Höhe verändern; ein Doppelpfeil 12 soll die Verstellmöglichkeit andeuten. Mit lösbaren Befestigungsmitteln 13, die dem Drehgelenk 10 gegenüberliegend an der Seite der Abweisfläche 6 vorgesehen sind, lassen sich das Bodenteil 9 und das Obterteil 11 miteinander verriegeln. Die Abweisfläche 6, die sich aus Teilflächen an dem Bodenteil 9 und dem Oberteil 11 zusammensetzt, ist gepolstert ausgeführt, wie dies mit 14 beziffert ist.

Im Bodenteil 9 ist außerdem ein Sicherungsriegel 15 vorgesehen, der aus einem kolbenähnlichen Teil und einem Schaft zusammengesetzt ist. Der kolbenähnliche Teil soll als Trägheitsmasse wirken. Er sitzt in einer Kammer des Bodenteils 9 und stützt sich gegen eine Feder 16 ab. Der Schaft des Sicherungsriegels tritt aus der Kammer heraus und greift in eine Bohrung eines rahmenfesten Teiles 17. Mit einem vom Schaft abstehenden Griff 18 läßt sich die Verriegelung durch Verschieben des Schließriegels 15 in Richtung der Feder 16 lösen. Bei einem Auffahrunfall wird der Schließriegel 15 wegen seiner relativ großen Masse durch die Verzögerungskräfte in diese Richtung selbständig bewegt.

Das Behältnis weist außerdem an seinem Obterteil eine Klappe 19 auf, die das Hineingreifen in das Behältnis erlaubt. Ganz allgemein zeigt Fig. 2 einen formstabilen Aufbau des Behältnisses, der auch die als Knieschutz dienenden Ausformungen miteinbezieht.

In Fig. 3 sind die Phasen eines Unfalls dargestellt. Dabei fährt der Motorradfahrer 7 mit seinem Motorrad gegen ein Hindernis 20, das die Seitenwand eines Personenkraftwagens darstellen soll. Fig. 3a zeigt die Situation kurz vor dem Aufprall oder in einem Zeitpunkt, in dem der Fahrer 7 bereits bis zum Abstützelement 2 vorverlagert wurde. Der Motorradfahrer "klebt" mit seinem Oberkörper an der Abweisfläche 6. Die durch die Verzögerung auftretenden Kräfte verursachen eine Drehung des Abstützelements 2, wie dies Fig. 3b zeigt. Der Fahrer 7 wird aus dem Sitz 1 gehoben und nach oben beschleunigt. Wenn die Zetrifugalkraft zu groß wird, rutscht er über die Abweisfläche 6 und fliegt nach Fig. 3c in einer Bahn, die vom Pfeil 21 dargestellt ist, über das Hindernis 20 hinweg.

**Patentansprüche**

1. Einspurfahrzeug, insbesondere Motorrad mit einem Sitz (Sitzbank 1) und einem etwa vor dem Oberkörper des Fahrers (7) angeordneten formstabilen Abstützelement (2), das eine dem Fahrer zugekehrte Abweisfläche (6) aufweist, dadurch gekennzeichnet, daß das Abstützelement (2) gegenüber dem Motorradrahmen am Motorrad schwenkbar gelagert ist, wobei die Schwenkachse durch eine unterhalb und vor der Abweisfläche (6) vorgesehenen Querachse (5) gebildet ist.

2. Einspurfahrzeug nach Anspruch 1, dadurch gekennzeichnet, daß die Abweisfläche (6) in ihrer Höhe verstellbar ist.

3. Einspurfahrzeug nach Anspruch 2, dadurch gekennzeichnet, daß das Abstützelement (2) aus einem Bodenteil (9) und einem daran schwenkbar angelegtn Oberteil (11) besteht, wobei die Schwenkbase (10) der Abweisfläche (6) gegenüberliegt und das Boden- und das Oberteil (9, 11) auf der Seite der Abweisfläche (6) in unterschiedlich hohen Stellungen miteinander verriegelbar sind.

4. Einspurfahrzeug nach einem oder mehreren der Ansprüche 1 bis 3, dadurch gekennzeichnet, daß das Abstützelement (2) einen federbelasteten, mit einer Trägheitsmasse versehenen Sicherungsriegel (15) aufweist, der in ein rahmenfestes Teil (17) des Motorrads einrastbar ist.

**Revendications**

1. Véhicule à un voie, en particulier moto, avec un siège (selle 1) et un élément d'appui (2), de formes stables, disposé à peu près devant la partie supérieure du corps du conducteur (7), qui possède une surface d'éjection (6), tournée vers le conducteur, caractérisé en ce que l'élément d'appui (2) est logé sur la moto, de manière oscillante par rapport au châssis de la moto, l'axe d'articulation étant à cette occasion formé par un axe transversal (5), prévu au-dessous et devant la surface d'éjection (6).

2. Véhicule à une voie selon la revendication 1, caractérisé en ce que la surface d'éjection (6) est réglable en sa hauteur.

3. Véhicule à une voie selon la revendication 2, caractérisé en ce que l'élément d'appui (2) se compose d'une partie de fond (9) et d'une partie supérieure (11) qui est disposée sur lui de manière oscillante, l'articularion pivotante (10) étant opposée à la surface d'éjection (6) et la partie de fond et la partie supérieur (9, 11) étant verrouillables ensemble sur le côté de la surface d'éjection (6) en différents réglages de hauteur.

4. Véhicule à une voie, selon une ou plusieurs des revendications 1 à 3, caractérisé en ce que l'élément d'appui (2) possède un verrou de sécurité (15), soumis à l'action d'un ressort, pourvu d'une masse d'inertie et qui est encliquetable dans une partie (17) du châssis de moto, liée rigidement avec le châssis.

**Claims**

1. A single-track vehicle, especially a motor cycle, having a seat (seat bench 1) and a support element (2) of stable form arranged substantially in front of the upper part of the body of the rider (7) and having a deflector surface (6) facing the rider, characterised in that the support element (2) is mounted on the motor cycle so as to be pivotable with respect to the motor cycle frame, the pivot axis being formed by a transverse spindle (5) provided beneath and in front of the deflector surface (6).

2. A single-track vehicle according to Claim 1, characterised in that the deflector surface (6) is adjustable in height.

3. A single-track vehicle according to Claim 2, characterised in that the support element (2) comprises a bottom part (9) and a top part (11) pivotably attached thereto with the pivotal axis (10) lying opposite to the deflector surface (6) and the bottom and top parts (9, 11) being lockable with one another in positions of different height on the side of the deflector surface (6).

4. A single-track vehicle according to one or more of the Claims 1 to 3, characterised in that the support element (2) is provided with a springloaded securing bolt (15) having an inertia mass and being engageable in a part (17) of the motor cycle fast with the frame.

_Fig. 1_

_Fig. 2_

0 115 588

Fig. 3a

Fig. 3b

Fig. 3c

2